# EUROPEAN PATENT APPLICATION

(11) **EP 4 339 530 A1**
(43) Date of publication of application: **20.03.2024**
(21) Application number: 22806871.4
(22) Date of filing: 16.05.2022
(51) Int. Cl.: F25B 1/00, F25B 41/31, F25B 49/02

(54) **REFRIGERATING SYSTEM, EXPANSION VALVE ASSEMBLY AND METHOD FOR CONTROLLING REFRIGERATING SYSTEM**

(30) Priority: 14.05.2021 CN 202110530306
(71) Applicant: Zhejiang Sanhua Automotive Components Co., Ltd., Hangzhou, Zhejiang 310018 (CN)
(72) Inventor: TAN, Yongxiang, Zhejiang 310018 (CN)
(74) Representative: Epping - Hermann - Fischer
(86) International application number: PCT/CN2022/093002
(87) International publication number: WO 2022/237909

(57) **Abstract**

The present application relates to a refrigerating system, an expansion valve assembly and a method for controlling a refrigerating system. The refrigerating system comprises a bypass channel, a second temperature sensor and a controller, wherein the bypass channel communicates a first channel with a second channel and is provided with a throttling portion, which is located between an inlet and an outlet of the bypass channel; a sensing head of the second temperature sensor is arranged in the bypass channel, and is between the throttling portion and the outlet of the bypass channel and close to the outlet; when the system is in operation, a working medium in the bypass channel where the sensing head of the second temperature sensor is located is in a saturated state, and the controller obtains sensing results of a first temperature sensor and the second temperature sensor, determines the difference between the sensing results, and determines the degree of superheat at an inlet of a compressor according to the difference. According to the present application, the problem whereby a refrigerating system needs to depend on a pressure sensor to determine the degree of superheat at an inlet of a compressor is solved, and a reduction in the manufacturing cost is facilitated.

## Description

This application claims priority to Chinese Patent Application No. 202110530306.8, titled "REFRIGERATING SYSTEM, EXPANSION VALVE ASSEMBLY AND METHOD FOR CONTROLLING REFRIGERATING SYSTEM", filed on May 14, 2021 with the China National Intellectual Property Administration, which is incorporated herein by reference in its entirety.

### FIELD

The present application relates to the field of air conditioning, and in particular to a refrigeration system, an expansion valve assembly, and a method for controlling a refrigerant system.

### BACKGROUND

In the related technology, a refrigeration system is provided with a temperature sensor for sensing temperature data and a pressure sensor for sensing pressure data. The refrigeration system can determine and control, based on the temperature data and the pressure data, a superheat degree of an inlet of a compressor, so as to ensure no liquid refrigerant to flow into the compressor, thereby preventing the compressor from being damaged by the liquid refrigerant. However, the cost of the pressure sensor is high.

No effective solution has been proposed for the problem in the related technology that the superheat degree of the inlet of the compressor needs to be determined for the refrigeration system by the pressure sensor, which increases the manufacturing costs.

### SUMMARY

It is an object of the present application to provide a refrigeration system, an expansion valve assembly, and a method for controlling a refrigeration system, which are conducive to reducing the manufacturing costs.

In order to achieve the above object, the following technical solutions are provided according to the present application.

A refrigeration system includes a compressor, a condenser, an expansion valve, an evaporator, a first passage, a first temperature sensor, and a second passage. The evaporator and the compressor are in communication with each other through the first passage, a sensing head of the first temperature sensor is arranged in the first passage, the second passage is arranged between the condenser and the evaporator, and the expansion valve is configured to form a throttling position in the second passage. The refrigeration system further includes:
a bypass passage, which has an outlet in communication with the first passage and an inlet in communication with the second passage, and the bypass passage is provided with a throttling portion, which is arranged between the inlet of the bypass passage and the outlet of the bypass passage; and
a second temperature sensor, and a sensing head of the second temperature sensor is arranged in the bypass passage and between the throttling portion and the outlet of the bypass passage, and is arranged adjacent to the outlet.

An expansion valve assembly, applied to a refrigeration system, is further provided according to the present application. The expansion valve assembly includes an expansion valve, a first temperature sensor, a bypass passage, a second temperature sensor, and a controller. The expansion valve includes a valve body and a valve core, the valve body has a first hole passage and a second hole passage, a sensing head of the first temperature sensor is arranged in the second hole passage, the valve core cooperates with the first hole passage to form a throttling position, and the first hole passage and the second hole passage are in communication with each other through the bypass passage; and
a sensing head of the second temperature sensor is arranged within the bypass passage and located at one side, towards the second hole passage, of the bypass passage.

A method for controlling a refrigeration system, applied to the refrigeration system, is further provided according to the present application. The method includes:
obtaining sensing results of a first temperature sensor and a second temperature sensor within the refrigeration system;
determining a difference between the sensing results of the first temperature sensor and the second temperature sensor; and
determining, based on the difference, a superheat degree of an inlet of the compressor of the refrigeration system.

In the above embodiments of the present application, the bypass passage, the second temperature sensor and the controller are provided in the refrigeration system, the first passage and the second passage are in communication with each other through the bypass passage, the bypass passage is in communication with the first passage through the outlet and in communication with the second passage through the inlet, the bypass passage has the throttling portion located between the inlet and the outlet of the bypass passage, and the sensing head of the second temperature sensor is arranged in the bypass passage and located between the throttling portion and the outlet of the bypass passage, and is arranged adjacent to the outlet. Obtaining the superheat degree by using the two temperature sensors is conducive to reducing the manufacturing costs when compared to obtaining the superheat degree by using a temperature sensor and a pressure sensor.

### BRIEF DESCRIPTION OF THE DRAWINGS

The accompanying drawings illustrated herein are used to provide a further understanding of the present application and form part of the present application, and the schematic embodiments of the present application and their description are used to explain the present application and do not constitute an undue limitation to the present application. In the accompanying drawings:
FIG. 1 is a structural block diagram of a refrigeration system according to a first embodiment of the present application;
FIG. 2 is a structural block diagram of a refrigeration system according to a second embodiment of the present application;
FIG. 3 is a pressure-enthalpy schematic diagram of a refrigeration system according to an embodiment of the present application;
FIG. 4 is a structural block diagram of a refrigeration system according to a third embodiment of the present application;
FIG. 5 is a structural block diagram of a refrigeration system according to a fourth embodiment of the present application;
FIG. 6 is a structural block diagram of a refrigeration system according to a fifth embodiment of the present application;
FIG. 7 is a structural block diagram of a refrigeration system according to a sixth embodiment of the present application;
FIG. 8 is a schematic structural diagram of a bypass passage according to a seventh embodiment of the present application;
FIG. 9 is a schematic structural diagram of a bypass passage according to an eighth embodiment of the present application;
FIG. 10 is a schematic structural diagram of a bypass passage according to a ninth embodiment of the present application;
FIG. 11 is a schematic diagram of a flow direction of working medium of a refrigeration system according to a tenth embodiment of the present application; and
FIG. 12 is a schematic diagram of a flow direction of working medium of a refrigeration system according to an eleventh embodiment of the present application.

Reference numerals in the accompanying drawings are as follows:

| | | | |
|---|---|---|---|
| 10 | compressor, | 20 | condenser, |
| 30 | expansion valve | 31 | valve body, |
| 311 | first hole passage | 312 | valve port, |
| 313 | second hole passage | 32 | valve core, |
| 40 | evaporator | 50 | first passage, |
| 60 | first temperature sensor | 70 | second passage, |
| 80 | bypass passage | 81 | throttling portion, |
| 90 | second temperature sensor. | | |

### DETAILED DESCRIPTION OF THE EMBODIMENTS

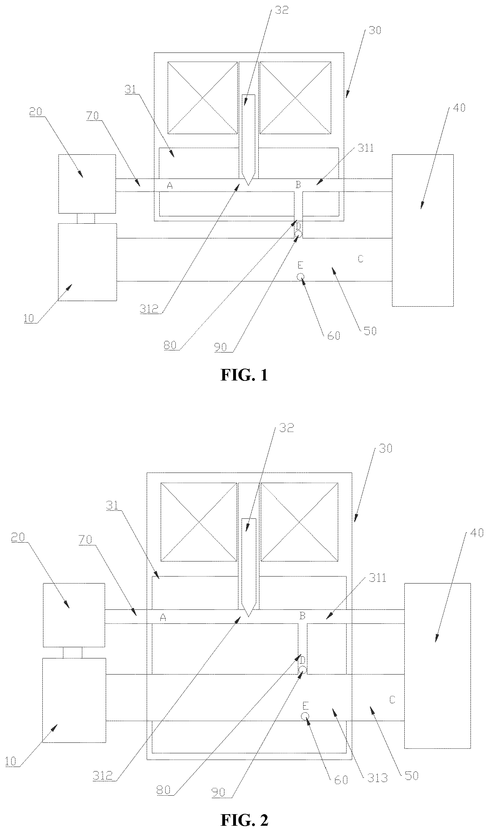

FIG. 1 is a structural block diagram of a refrigeration system according to a first embodiment of the present application. As shown in FIG. 1, the refrigeration system includes four fundamental devices including a compressor 10, a condenser 20, an expansion valve 30, and an evaporator 40. The compressor 10 supplies power for the refrigeration cycle, the compressor 10 rotates continuously through a motor, and can extract working medium (e.g., the working medium is refrigerant) inside the evaporator 40 in a timely manner. The compressor 10 also increases the pressure and temperature of the working medium through the compression effect. The condenser 20 is a heat exchange apparatus for cooling the working medium in the high temperature and high pressure from the compressor 10 through external environmental medium (for example, the external environmental medium is air or water). The working medium, after passing through the condenser 20, is condensed into high-pressure working medium with an ambient temperature. The high-pressure working medium with the ambient temperature cannot be delivered directly to the low-pressure low-temperature evaporator 40. According to the principle of one-to-one correspondence between saturation pressure and saturation temperature, that reducing the pressure of the working medium leads to the reducing of the saturation temperature of the working medium. Therefore, the high-pressure working medium with the ambient temperature may be throttled and depressurized through the expansion valve 30 to obtain low-temperature and low-pressure working medium. Then the low-temperature and low-pressure working medium is conveyed to the evaporator 40 and is heat-absorbed and evaporated within the evaporator 40. The evaporator 40 is also a heat exchange apparatus. The low-temperature and low-pressure working medium obtained by the throttling evaporates into vapor in the evaporator 40, absorbing the heat of an object to be cooled, so that the temperature of the object decreases, so as to achieve the purpose of cooling, freezing, refrigeration and so on. In addition to the four fundamental devices including the compressor 10, the condenser 20, the expansion valve 30 and the evaporator 40, the refrigeration system further includes a first passage 50, a first temperature sensor 60 and a second passage 70. The evaporator 40 and the compressor 10 are in communication with each other through the first passage 50, and the first temperature sensor 60 is configured to detect the temperature within the first passage 50, thereby providing part of detection data for measuring and controlling a superheat degree of the compressor 10, to ensure that no liquid working medium flows into an inlet of the compressor 10, thereby avoiding liquid strike damage to the compressor 10. The second passage 70 is located between the condenser 20 and the evaporator 40. The expansion valve 30 includes a valve body 31 and a valve core 32. A throttling position is formed in the second passage 70 by the valve core 32 and the second passage. Specifically, the valve core 32 is moved upwardly or downwardly to regulate the flow area of the second passage 70 for the purpose of throttling. In the present application, at least part of the second passage 70 is formed in the expansion valve 30, and may be located in particular in the valve body 31 of the expansion valve 30.

FIG. 2 is a structural block diagram of a refrigeration system according to a second embodiment of the present application. As shown in FIG. 2, the first passage 50 may be formed in the expansion valve 30 for industrial applications. The refrigeration system according to the second embodiment of the present application further includes a bypass passage 80 and a second temperature sensor 90. In this embodiment, at least part of the first passage 50 and at least part of the second passage 70 are formed in the expansion valve 30, in particular formed in the valve body 31 of the expansion valve 30. The second passage 70 is arranged between the condenser 20 and the evaporator 40, and the first passage 50 is arranged between the evaporator 40 and the compressor 10. A sensing head of the first temperature sensor 60 is arranged in the first passage 50. The first passage 50 and the second passage 70 are in communication with each other through the bypass passage 80, and a sensing head of the second temperature sensor 90 is arranged in the bypass passage 80 and is located at one side, adjacent to the first passage 50, of the bypass passage 80. The bypass passage 80 may be a tiny passage with a circular cross-section or any other shape. Considering that in a case that the sensing head of the second temperature sensor 90 partially protrudes out of a wall surface of the first passage 50, the sensing head may be affected by superheated gas C at an outlet of the evaporator 40, which may result in an inaccurate detected temperature, and that in a case that the sensing head of the second temperature sensor 90 is too far away from the wall surface of the first passage 50, the pressure at the sensing head is not equal to the pressure in the first passage 50, which may affect the determination of the final superheat degree, the second temperature sensor 90 may be provided at one end of the bypass passage 80 and towards the wall surface of the first passage 50, with a premise of not being affected by the superheated gas C at the outlet of the evaporator 40.

It should be noted that the size of the bypass passage 80 should be selected appropriately. Specifically, the size of the bypass passage 80 needs to satisfy that in a case that when the refrigeration system is in operation, the working medium in the bypass passage 80 where the sensing head of the second temperature sensor 90 is located is in a saturated state. A too small size of the bypass passage 80 may result in a too small bypass flow rate, and the working medium may already be heated or cooled by the expansion valve 30 and the environment, becoming a superheated gas or super-cooled liquid, before reaching at the second temperature sensor 90. The temperature of the working medium detected by the second temperature sensor 90 is not the saturation temperature of the gas-liquid two-phase fluid. A too large size of the bypass passage 80 may result in a too large bypass flow rate, and too much gas-liquid two-phase working medium enters the first passage 50 through the bypass passage 80. The gas at the outlet of the evaporator 40 may require a greater superheat degree of under the circumstance of ensuring a certain superheat degree of the first passage 50, which may reduce the working efficiency of the evaporator 40.

In an embodiment, in order to allow the working medium at the second temperature sensor 90 to be in a saturated state when the refrigeration system is in operation, the size of the bypass passage 80 may be determined in the following manner. In the processing stage, pressure and temperature of the working medium in the bypass passage 80 at the location of the sensing head of the second temperature sensor 90 in the bypass passage 80 are obtained by a pressure sensor and a temperature sensor. The pressure and temperature of the working medium at the location are compared with values in a table of temperature and pressure correspondences in the saturated state. If the measured pressure and temperature are the same as or substantially the same as one of pairs of pressure and temperature in the table, the bypass passage 80 may be processed in accordance with a size of the bypass passage 80 in this case.

In addition, the refrigeration system further includes a controller (not shown in the figures). The controller is configured to obtain sensing results of the first temperature sensor 60 and the second temperature sensor 90, determine a difference between the sensing results of the first temperature sensor 60 and the second temperature sensor 90, and determine, based on the difference, a superheat degree of the inlet of the compressor 10.

An operating principle by which the controller can determine the superheat degree of the inlet of the compressor 10 based on the difference is further provided according to an embodiment of the present application, which is only schematic illustration and not limiting illustration. The operating principle is as follows.

As shown in FIG. 2, the compressor 10 compresses a gaseous low-temperature and low-pressure working medium gas into a high-temperature and high-pressure gas and discharges the high-temperature and high-pressure gas. The gaseous high-temperature and high-pressure working medium liquefies when passing through the condenser 20 and the heat is taken away by the air outside a vehicle. High-pressure liquid working medium A is depressurized by the throttling effect of the expansion valve 30 into a low-pressure gas-liquid two-phase fluid B. A branch of low-pressure gas-liquid two-phase fluid absorbs heat in the evaporator 40 and becomes the superheated gas C. The other branch of low-pressure gas-liquid two-phase fluid B enters the bypass passage 80, and after being throttled by the bypass passage 80, its pressure is further reduced and becomes gas-liquid two-phase fluid D. The gas-liquid two-phase fluid D in the bypass passage 80 and the superheated gas C at the outlet of the evaporator 40 are brought together in the first passage 50 to become the gas E. As the bypass passage 80 is in communication with the first passage 50, the pressure of the gas-liquid two-phase fluid D and the pressure of the gas E are approximately equal to each other, and the saturation temperature of the gas E is the same as the saturation temperature of the gas-liquid two-phase fluid D. Since the size of the bypass passage 80 has been controlled when being produced, so that the gas-liquid two-phase fluid D is in a saturated state, the saturation temperature of the gas-liquid two-phase fluid D is the temperature of the gas-liquid two-phase fluid D. Therefore, the superheat degree of the first passage 50 may be a difference between the temperature of the gas E and the temperature of the gas-liquid two-phase fluid D. Since the first temperature sensor 60 detects the temperature of the surrounding gas E and the second temperature sensor 90 detects the temperature of the surrounding gas-liquid two-phase fluid D, the superheat degree of the first passage 50 may be the difference between the sensing results of the first temperature sensor 60 and the second temperature sensor 90. Since the first passage 50 is in communication with the inlet of the compressor 10, the superheat degree of the first passage 50 may be approximated as the superheat degree of the inlet of the compressor 10, in a case of ignoring the distance and pressure drop between the first passage 50 and the compressor 10.

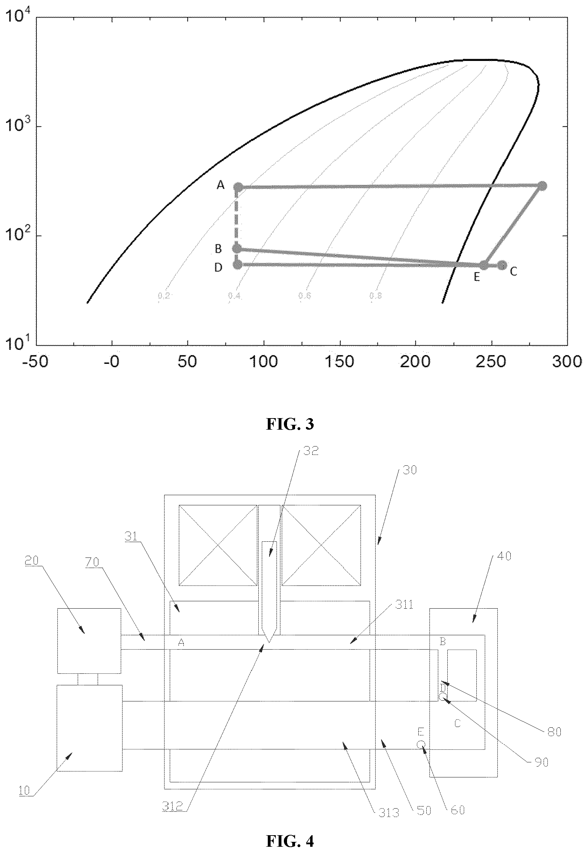

In order to avoid liquid strike damage to the compressor 10, it is required to ensure that the difference between the sensing results of the first temperature sensor 60 and the second temperature sensor 90 is greater than a set value. FIG. 3 is a pressure-enthalpy schematic diagram a refrigeration system according to an embodiment of the present application. As shown in FIG. 3, in order to avoid liquid strike damage to the compressor 10, the position of the gas E in the pressure-enthalpy schematic diagram should be in the region to the right of a solid line of the pressure-enthalpy schematic diagram. Furthermore, the working medium A cooled by the condenser becomes the low-temperature two-phase fluid B after being throttled and expanded through the second passage, and one branch absorbs heat through the evaporator and becomes the superheated gas C. Although the state of the working medium at the point B is a two-phase fluid, and the temperature at the point B is the saturation temperature at the point B, a pressure loss is generated through the evaporator 40, so that the saturation temperature at the point C is lower than that at the point B. Therefore, the temperature at the point B cannot be treated as the saturation temperature at the point C. Another branch of small flow rate of the working medium in the bypass passage 80 is further reduced to D, the working medium point corresponding to the point D is still in a two-phase state, its temperature is the saturation temperature, and the pressure at the point D and the pressure at the point C are equal to each other, the working medium corresponding the point E obtained after mixing of the working medium corresponding to the point C and the working medium corresponding to the point D maintain the pressure of the point D and the pressure of the point C substantially unchanged. Since the working medium corresponding to the point E is cooled by the two-phase fluid at the point D, the temperature at the point E is slightly lower than that at the point C. The temperature difference between the point E and the point D is the degree of superheat at the inlet of the compressor 10. For the compressor 10, the superheat degree at the point E, rather than the superheat degree at the point C, is the most important.

Since the cost of the pressure sensor is higher than that of the temperature sensor, determining the superheat degree of the inlet of the compressor 10 by obtaining the sensing results of the first temperature sensor 60 and the second temperature sensor 90 in the present application is more conducive to reducing the manufacturing costs when compared to determining the superheat degree of the inlet of the compressor 10 by obtaining the sensing results of the first temperature sensor 60 and the pressure sensor 90 in the related technology. Since the accuracy of the temperature sensor is higher than the accuracy of the pressure sensor when the temperature is below zero, the superheat degree determined by the embodiment of the present application is more accurate in a case that the temperature is below zero.

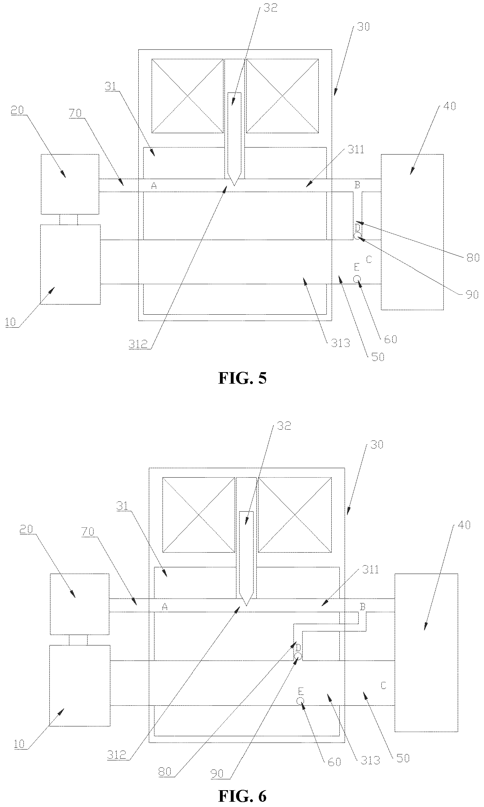

In this embodiment, as shown in FIG. 2, the bypass passage 80 is provided in the valve body of the expansion valve 30. In some other embodiments, as shown in FIG. 1, alternatively, the bypass passage 80 may be partially provided in the valve body of the expansion valve 30 and partially formed into a piping structure. In some other embodiments, as shown in FIG. 4, which is a structural block diagram of a refrigeration system according to a third embodiment of the present application, the bypass passage 80 may be formed within the evaporator 40, and a heat-insulating portion is provided between the bypass passage 80 and a main body portion of the evaporator 40, so as to avoid that the temperature within the evaporator 40 affects the temperature of the working medium within the bypass passage 80. In some other embodiments, as shown in FIG. 5, which is a structural block diagram of a refrigeration system according to a fourth embodiment of the present application, the bypass passage 80 may be provided between the expansion valve 30 and the evaporator 40 and in a separate piping structure.

In this embodiment, the bypass passage 80 is in a straight shape as shown in FIG. 2. In some other embodiments, as shown in FIG. 6, which is a structural block diagram of a refrigeration system according to a fifth embodiment of the present application, the bypass passage 80 may be in a bent shape.

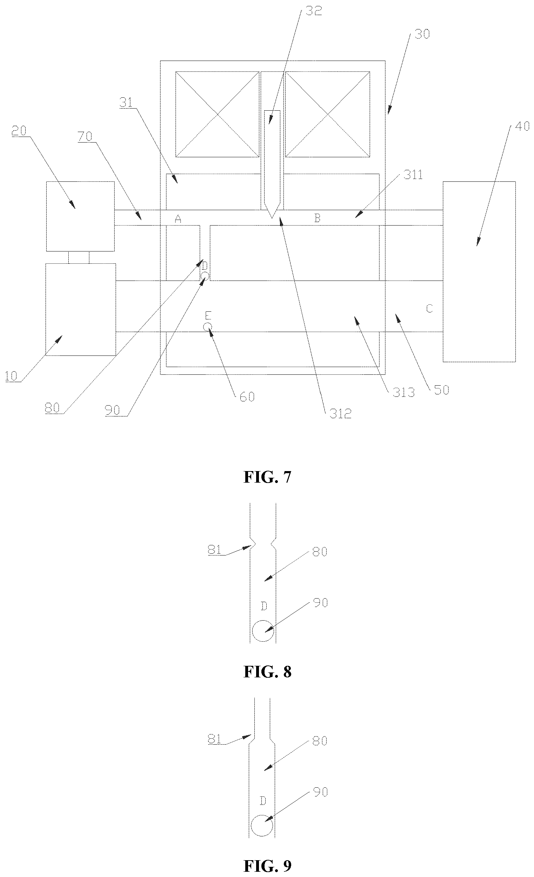

In an embodiment, in a case that the bypass passage 80 is at least partially arranged within the expansion valve 30, the bypass passage 80 may be arranged at any one side of the second passage 70 in the axial direction, i.e., the bypass passage 80 may be arranged at either the front side or the back side of the throttling position of the second passage 70. FIG. 7 is a structural block diagram of a refrigeration system according to a sixth embodiment of the present application. As shown in FIG. 7, the bypass passage 80 may be arranged at an inlet side of the second passage 70, and since the working medium enters the bypass passage 80 from state A instead of entering the bypass passage 80 from state B, the pressure difference between two ends of the bypass passage 80 is greater. Therefore, in a case that the bypass passage 80 is arranged at the inlet side of the second passage 70, the bypass passage 80 may be longer and narrower.

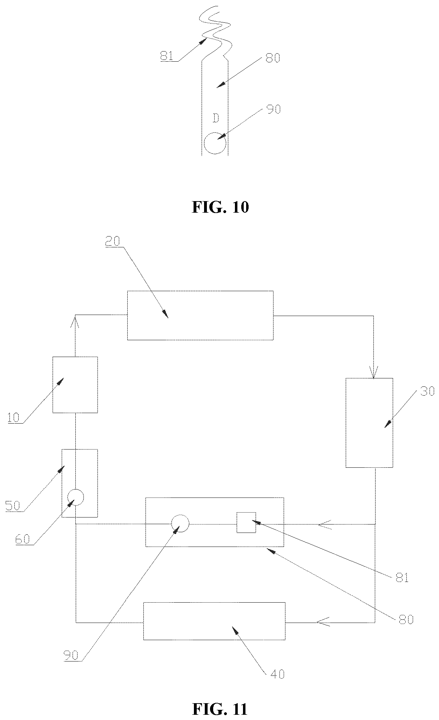

Further, in order to make the pressure drop of the bypass passage 80 significant so that the gas-liquid two-phase fluid D can more easily reach the requirements of the saturation state, a throttling portion 81 may be provided in the bypass passage 80. The throttling portion 81 is provided at one side, away from the first passage 50, of the second temperature sensor 90. The second temperature sensor 90 is located in a spacious area more spacious with respect to the throttling portion 81, so as to avoid a large pressure drop at the sensing location of the second temperature sensor 90. FIG. 8 is a schematic structural diagram of a bypass passage according to a seventh embodiment of the present application, FIG. 9 is a schematic structural diagram of a bypass passage according to an eighth embodiment of the present application, and FIG. 10 is a schematic structural diagram of a bypass passage according to a ninth embodiment of the present application. As shown in FIG. 8 to FIG. 10, the throttling portion 81 may be of an arbitrary shape. Optionally, in order to facilitate the machining, the throttling portion 81 may be formed in a regular shape.

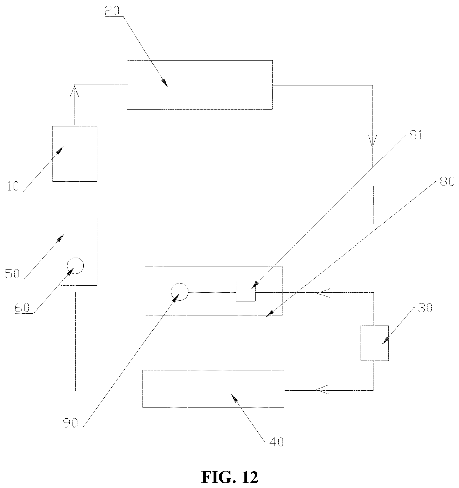

FIG. 11 is a schematic diagram of a flow direction of working medium of a refrigeration system according to a tenth embodiment of the present application, and FIG. 12 is a schematic diagram of a flow direction of working medium of a refrigeration system according to an eleventh embodiment of the present application. As shown in FIGS. 11 and 12, in a case that the bypass passage 80 is arranged outside the expansion valve 30, the bypass passage 80 may be arranged upstream of the second passage of the expansion valve 30, or, the bypass passage 80 may be arranged downstream of the second passage of the expansion valve 30.

It should be understood by those skilled in the art that technical features of the foregoing embodiments can be combined arbitrarily. For conciseness of description, not all possible combinations of the technical features of the foregoing embodiments are described. However, as long as there is no contradiction in the combinations of these technical features, they shall fall within the scope of this specification.

The foregoing embodiments only describe several implementations of the present application, which are described specifically and in detail, but cannot be construed as a limitation to the patent scope of the present application. For a person of ordinary skill in the art, several modifications and improvements can be made without departing from the idea of the present application. These modifications and improvements fall within the protection scope of the present application. Therefore, the protection scope of the present application shall be subject to the appended claims.

## Claims

1. A refrigeration system, comprising a compressor (10), a condenser (20), an expansion valve (30), an evaporator (40), a first passage (50), a first temperature sensor (60), and a second passage (70), wherein the evaporator (40) and the compressor (10) are in communication with each other through the first passage (50), a sensing head of the first temperature sensor (60) is arranged in the first passage (50), the second passage (70) is arranged between the condenser (20) and the evaporator (40), and the expansion valve (30) is configured to form a throttling position in the second passage (70), and the refrigeration system further comprises:
a bypass passage (80), which has an outlet in communication with the first passage (50) and an inlet in communication with the second passage (70), the bypass passage (80) is provided with a throttling portion (81), which is arranged between the inlet of the bypass passage (80) and the outlet of the bypass passage (80); and
a second temperature sensor (90), in which a sensing head of the second temperature sensor (90) is arranged in the bypass passage (80) and between the throttling portion (81) and the outlet of the bypass passage (80), and arranged adjacent to the outlet.

2. The refrigeration system according to claim 1, wherein the refrigeration system comprises a controller, the controller is configured to determine a superheat degree of an inlet of the compressor (10) based on sensing results of the first temperature sensor (60) and the second temperature sensor (90).

3. The refrigeration system according to claim 2, wherein the controller is configured to determine the superheat degree of the inlet of the compressor based on a difference between the sensing results of the first temperature sensor (60) and the second temperature sensor (90).

4. The refrigeration system according to any one of claims 1 to 3, wherein the expansion valve (30) comprises a valve body (31) and a valve core (32), the valve body (31) has a first hole passage (311), the first hole passage (311) has a valve port (312), the valve core (32) is movable relative to the valve port (312), the valve core (32) is configured to regulate a flow area of the first hole passage (311), and the first hole passage (311) is a part of the second passage (70).

5. The refrigeration system according to claim 4, wherein the valve body (31) has a second hole passage (313), the second hole passage (313) is a part of the first passage (50), and the first temperature sensor (60) is fixedly connected to the valve body (31).

6. The refrigeration system according to any one of claims 1 to 3, wherein the bypass passage (80) is at least partially arranged within the expansion valve (30), or the bypass passage (80) is at least partially arranged between the expansion valve (30) and the evaporator (40), or the bypass passage (80) is at least partially arranged within the evaporator (40), and a heat insulating portion is provided between the bypass passage (80) and a main body portion of the evaporator (40).

7. The refrigeration system according to claim 6, wherein the bypass passage (80) is at least partially arranged within the expansion valve (30), and the inlet of the bypass passage (80) is closer to an inlet of the second passage relative to the throttling position of the second passage (70), or the inlet of the bypass passage is closer to an outlet of the second passage than the throttling position of the second passage.

8. The refrigeration system according to claim 4, wherein one end, in communication with the first passage (50), of the bypass passage (80) is located in the valve body (31).

9. An expansion valve assembly, applied to a refrigeration system, wherein the expansion valve assembly comprises an expansion valve (30), a first temperature sensor (60), a bypass passage (80), a second temperature sensor (90), and a controller, the expansion valve (30) comprises a valve body (31) and a valve core (32), the valve body (31) has a first hole passage (311) and a second hole passage (313), a sensing head of the first temperature sensor (60) is arranged in the second hole passage (313), the valve core (32) is configured to cooperate with the first hole passage (311) to form a throttling position, and the first hole passage (311) and the second hole passage (313) are in communication with each other through the bypass passage (80); and
a sensing head of the second temperature sensor (90) is arranged in the bypass passage (80) and located at one side, towards the second hole passage (313), of the bypass passage (80).

10. The refrigeration system according to claim 9, wherein the expansion valve assembly comprises a controller, the controller is configured to determine a superheat degree of an outlet of the second hole passage (313) based on sensing results of the first temperature sensor (60) and the second temperature sensor (90).

11. The refrigeration system according to claim 10, wherein the controller is configured to determine the superheat degree of the outlet of the second hole passage (313) based on a difference between the sensing results of the first temperature sensor and the second temperature sensor.

12. The expansion valve assembly according to any one of claims 9 to 11, wherein the bypass passage (80) comprises a throttling portion (81), which is arranged at one side, away from the second hole passage (313), of the second temperature sensor (90).

13. The expansion valve assembly according to claim 12, wherein the second temperature sensor (90) is arranged at an end of the bypass passage (80) and is towards a wall surface of the second hole passage (313).

14. A method for controlling a refrigeration system, applied to the refrigeration system according to claim 1, wherein
the method comprises:
obtaining sensing results of a first temperature sensor (60) and a second temperature sensor (90) within the refrigeration system;
determining a difference between the sensing results of the first temperature sensor (60) and the second temperature sensor (90); and
determining, based on the difference, a superheat degree of an inlet of the compressor (10) of the refrigeration system.
